# EUROPÄISCHE PATENTSCHRIFT

(11) **EP 1 852 007 B1**
(45) Veröffentlichungstag und Bekanntmachung des Hinweises auf die Patenterteilung: **25.02.2009**
(21) Anmeldenummer: 07008494.2
(22) Anmeldetag: 26.04.2007
(51) Int. Cl.: A01B 79/00, G07C 5/00

(54) **Datenverbindungssystem**
Data connection system
Système de liaison de données

(30) Priorität: 04.05.2006 DE 102006020704
(43) Veröffentlichungstag der Anmeldung: 07.11.2007
(73) Patentinhaber: Amazonen-Werke H. Dreyer GmbH & Co. KG, 49205 Hasbergen (DE)
(72) Erfinder: Marquering, Johannes, Dr., 49176 Borgloh (DE)

(56) Entgegenhaltungen:
- DE-A1- 10 217 398
- US-A1- 2002 107 624
- US-A1- 2005 096 810

## Beschreibung

Die Erfindung betrifft ein Datenverbindungssystem gemäß des Oberbegriffes des Patentanspruches 1.

Durch die US 2005/0096810 ist ein Datenverbindungssystem gemäß des Oberbegriffes des Patentanspruches 1 beschrieben.

Ein weiteres derartiges Datenverbindungssystem ist durch die DE 102 17 398 A1 bekannt. Dieses Datenverbindungssystem zwischen einem landwirtschaftlichen Bordcomputer und einem Diagnose- und/oder Servicecomputer kann für eine Ferndiagnose vorgesehen sein. Hierbei werden entsprechende Daten zwischen dem landwirtschaftlichen Bordcomputer und dem Diagnose- und/oder Servicecomputer übertragen. Auch können Software-Updates in die Steuerung bzw. den Bordcomputer eingespielt werden.

Immer komplexer werdende Maschinenstrukturen und flexible Menüstrukturen führen häufig zu Bedienungsfehlern der Bordcomputer durch den Bediener von Landmaschinen.

Derzeit ist das übliche Vorgehen, dass die Bediener von Landmaschinen zum Handy greifen und den Service-Dienst der Landmaschinenhersteller anrufen.

Hierbei ist problematisch, dass der Service-Mitarbeiter des Landmaschinenherstellers nicht sieht, was auf dem Bordcomputer des Kunden passiert. Er ist auf die Beschreibung der Bildschirminhalte durch den Bediener der Landmaschine angewiesen. Weiterhin können Fehler durch das Betätigen falscher Tasten durch den Bediener von dem Service-Mitarbeiter nicht nachvollzogen werden, da der Bediener immer wieder den gleichen Fehler macht. Häufig kommt es vor, dass z. B. rechts, links, oben, unten vertauscht wird.

Entsprechend der Maßnahmen gemäß der Merkmale der Ansprüche 4 und 5 kann der Service-Mitarbeiter den Bordcomputer oder die Landmaschine fernbedienen, eine Fernkontrolle oder eine Fernüberwachung durchführen.

Um die tatsächlichen Vorgänge auf dem Bildschirm des Service-Mitarbeiters S darstellen zu können, ist vorgesehen, dass die Abbildung auf der Anzeigevorrichtung des Bordcomputers in Echtzeit auf der der Anzeigevorrichtung des Computers anzeigund/oder aktualisierbar ist.

Weitere Einzelheiten der Erfindung sind den übrigen Unteransprüchen, der Beispielsbeschreibung und der Zeichnung zu entnehmen. Die Zeichnung zeigt
ein Datenverbindungssystem zwischen einem landwirtschaftlichen Bordcomputer und einem Diagnose- und Service-Computer in Prinzipdarstellung.

Auf dem eine nicht dargestellte Landmaschine ziehenden oder tragenden Schlepper 1 ist ein landwirtschaftlicher Bordcomputer 2 zur Einstellung, Steuerung und/oder Regelung von der an dem Ackerschlepper angeordneten Landmaschine, dem Schlepper selbst oder deren Einstellelementen und Vorrichtungen, angeordnet. Der Bordcomputer 2 weist eine als Display 3 ausgebildete bildschirmähnliche Anzeigevorrichtung, auf welcher mittels der Anzeige und Darstellung 4, beispielsweise die Programmabläufe oder verschiedene Parameter angezeigt werden, auf. Weiterhin weist der Bordcomputer 2 beispielsweise als Tasten 5 ausgebildete Bedienungsvorrichtungen auf. Über die als Tasten ausgebildete Bedienungsvorrichtung können Eingabebefehle an den Bordcomputer 2 eingegeben werden. Mittels dieser Eingabetasten 5 kann durch das Menü oder das Programm des Bordcomputers 2 navigiert werden.

Wenn der Bediener der Landmaschine den Bordcomputer 2 nicht richtig bedient oder der Bordcomputer 2 Fehlermeldungen anzeigt, die der Bediener der Landmaschine nicht richtig interpretieren kann, greift er häufig zum Handy oder Telefon um Ratschläge und Anweisungen von einem Service-Mitarbeiter S des Landmaschinenherstellers oder des Herstellers des Bordcomputers zu erhalten.

Die Schwierigkeit besteht nun darin, dass der Service-Mitarbeiter S sich auf die mündlichen Beschreibungen des Bedieners der Landmaschine verlassen muss und es hier häufig zu Missverständnissen kommt.

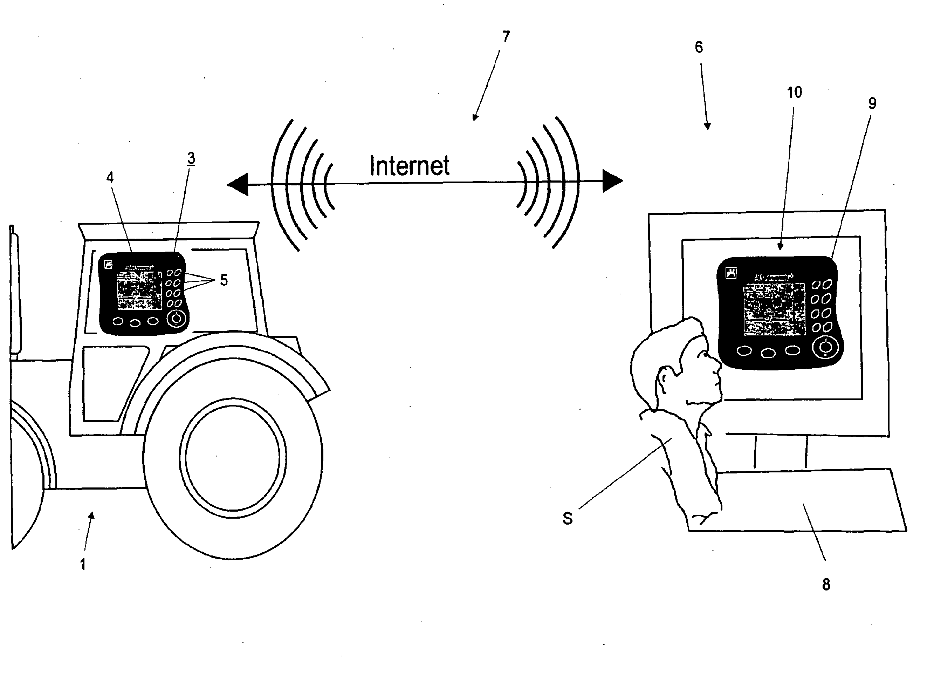

Um diesem abzuhelfen, verbindet der Service-Mitarbeiter S einen Diagnosecomputer 6 über eine Datenfernverbindung 7, beispielsweise einer Internetverbindung mit dem Bordcomputer 2 des Hilfe suchenden Bedieners der Landmaschine. Der Diagnose- oder Service-Computer 6 weist eine Bedienungsvorrichtung 8 und eine bildschirmähnliche Anzeige 9 auf. Hierbei ist der Diagnose- und Service-Computer 6 bzw. dessen Software derart ausgelegt, dass auf der Anzeigevorrichtung 9 des Diagnose-Computers 6 die Abbildung der Anzeigen 3 und Bedienungsvorrichtung 5 des Bordcomputers 2 beispielsweise in form der Abbildung 10 abbildbar ist. Die Darstellung 4 ist auf der Anzeigevorrichtung 3 des Bordcomputers 2 und die Bedienungsvorrichtung 5 werden in Echtzeit auf der Anzeigevorrichtung 9 des Computers 6 angezeigt und aktualisiert. Hierüber erkennt der Service-Mitarbeiter S, welche Anzeige 4 auf dem Display 3 des Bordcomputers aktuell dargestellt wird und welche Bedienelemente, beispielsweise Tasten 5 oder andere Menü-Bedienungselemente der Bediener der Landmaschine betätigt. Somit erkennt der Service-Mitarbeiter S welche Darstellung 4 auf dem Bordcomputer 2 aktuell angezeigt wird und welche Tasten 4 oder andere Bedienelemente der Bediener der Landmaschine tatsächlich betätigt. Der Service-Mitarbeiter S kann somit erkennen, ob der Bediener der Landmaschine den Bordcomputer 2 richtig programmiert hat, eingeschaltet hat, das richtige Menü aufgerufen hat, die richtige Taste 4 oder Tastenkombination für den jeweiligen Fall betätigt hat. Der Service-Mitarbeiter S kann dem Bediener folgen, ohne dass der Bediener der Landmaschine bzw. des Bordcomputers erläutern muss, welche Bedienungsschritte er durchführt.

Somit kann der Service-Mitarbeiter S die Bedienungsabfolgen genau nachvollziehen, in die Bedienungsabfolgen eingreifen und/oder einfach und ohne viele Worte dem Bediener die richtige Bedienung zeigen.

Des Weiteren sind mittels des Diagnose- und/oder Service-Computers 6 Eingabebefehle an den Bordcomputer 2 zu übermitteln, so dass die Landmaschine durch den Service-Mitarbeiter S einzustellen, zu steuern und zu regeln ist.

Auch kann die Datenfernübertragung 7 zur Ferninbetriebnahme und Fernbedienung des Bordcomputers 2 oder der Landmaschine genutzt werden.

Weiterhin kann die Datenfernverbindung 7 zur Fernkontrolle oder Fernüberwachung des Bordcomputers 2 oder der Landmaschine genutzt werden. Denn die gesamten Anzeigen und Darstellungen auf dem Display 3 werden auch auf dem Bildschirm 9 des Service-Computers 6 angezeigt. Um sicherzugehen, dass der Bediener die weiteren Bedienungsschritte richtig durchführt, kann die Datenfernverbindung 7 zur Fernkontrolle und Fernüberwachung des Bedieners des Bordcomputers 2 durch den Bediener des Bordcomputers 2 genutzt werden um. Falls wieder Fehlermeldungen auftreten, kann der Service-Mitarbeiter S genau nachvollziehen, welche Bedienungsschritte durch den Bediener der Landmaschine durchgeführt worden sind, um so die Ursache zu erforschen und eine Fehlerdiagnose durchführen zu können. Somit kann also über die Datenfernübertragungseinrichtung 7 vom Arbeitsplatz des Service-Mitarbeiters S durch den Service-Mitarbeiter S dem Bediener der Landmaschine geholfen werden.

Somit sieht der Service-Mitarbeiter S was auf dem Bordcomputer 2 des Kunden passiert und ist nicht auf die mündliche Beschreibung der Bildschirminhalte 4 und der mündlichen Schilderung der Bedienungsschritte angewiesen.

## Patentansprüche

1. Datenverbindungssystem zwischen einem landwirtschaftlichen Bordcomputer zur Einstellung, Steuerung und/oder Regelung von Landmaschinen und/oder deren Einstellelementen und Vorrichtungen mit einer bildschirmähnlichen Anzeigevorrichtung, wie beispielsweise Display, und einem Diagnose- und/oder Servicecomputer, wobei der Bordcomputer mittels einer Datenfernübertragungseinrichtung mit einem Diagnose- und/oder Servicecomputer verbindbar ist, wobei der Diagnose- und/oder Servicecomputer (6) eine Bedienungsvorrichtung (8) und eine bildschirmähnliche Anzeige (9) aufweist, und wobei auf der Anzeigevorrichtung (9) des Diagnose-Computers (6) Abbildungen (10) abbildbar sind, **dadurch gekennzeichnet, dass** die Abbildungen (10) die Anzeige- und Bedienungsvorrichtung (4) des Bordcomputers (2) sind, dass zwischen dem Bordcomputer (2) und dem Diagnose-Computer (6) eine derartige Datenverübertragung herstellbar ist, dass eine Kopie des Bildschirminhalts und/oder der Bedienungselemente des Bordcomputers der Maschine auf dem Bildschirm des Diagnose- und/oder der Servicecomputer dargestellt wird.

2. Datenverbindungssystem nach Anspruch 1, **dadurch gekennzeichnet, dass** mittels des Diagnose- und/oder Servicecomputers (6) Eingabebefehle an den Bordcomputer (2) übermittelbar und so die Landmaschine einstell-, steuer- und/oder regelbar ist.

3. Datenverbindungssystem, nach Anspruch 1, **dadurch gekennzeichnet, dass** die Datenfernverbindung (7) zur Ferninbetriebnahme des Bordcomputers (2) und/oder der Landmaschine nutzbar ist.

4. Datenverbindungssystem nach Anspruch 1, **dadurch gekennzeichnet, dass** die Datenfernverbindung (7) zur Fernbedienung des Bordcomputers (2) und/oder der Landmaschine nutzbar ist.

5. Datenverbindungssystem nach Anspruch 1, **dadurch gekennzeichnet, dass** die Datenfernverbindung (7) zur Fernkontrolle und/oder Fernüberwachung des Bordcomputers (2) und/oder der Landmaschine nutzbar ist.

6. Datenverbindungssystem nach Anspruch 1, **dadurch gekennzeichnet, dass** die Datenfernverbindung (7) zur Fernkontrolle und/oder Fernüberwachung der Bedienung des Bordcomputers (2) durch den Bediener des Bordcomputers (2) nutzbar ist.

7. Datenverbindungssystem nach einem oder mehreren der vorstehenden Ansprüche, **dadurch gekennzeichnet, dass** die Abbildung (4,10) auf der Anzeigevorrichtung (3) des Bordcomputers (2) in Echtzeit auf der der Anzeigevorrichtung (9) des Computers (6) anzeig- und/oder aktualisierbar ist.

## Claims

1. Data connection system between a diagnostic and/or service computer and an agricultural on-board computer for adjusting/ controlling and/or regulating agricultural machines and/or their adjusting elements and devices using a screen-like display device, such as, for example, a display unit , wherein the on-board computer is connectable to a diagnostic and/or service computer by means of a remote data transmission device, wherein the diagnostic and/or service computer (6) has an operating device (8) and a screen-like display unit (9) and wherein images (10) can be imaged on the display device (9) of the diagnostic computer (6), **characterised in that** the images (10) are the display and operating device (4) of the on-board computer (2), **in that** between the on-board computer (2) and the diagnostic computer (6) data transmission can be set up such that a copy of the screen content and/or of the operating elements of the on-board computer of the machine is represented on the screen of the diagnostic and/or service computer.

2. Data connection system according to claim 1, **characterised in that** input instructions can be transmitted to the on-board computer (2) by means of the diagnostic and/or service computer and the agricultural machine is adjustable, controllable and/or regulatable in this manner.

3. Data connection system according to claim 1, **characterised in that** the remote data connection (7) can be used for the remote start-up of the on-board computer (2) and/or of the agricultural machine.

4. Data connection system according to claim 1, **characterised in that** the remote data connection (7) can be used for the remote operation of the on-board computer (2) and/or of the agricultural machine.

5. Data connection system according to claim 1, **characterised in that** the remote data connection (7) can be used for the remote control and/or remote monitoring of the on-board computer (2) and/or of the agricultural machine.

6. Data connection system according to claim 1, **characterised in that** the remote data connection (7) can be used for the remote control and/or remote monitoring of the operation of the on-board computer (2) by the operator of the on-board computer (2).

7. Data connection system according to one or more of the preceding claims, **characterised in that** the image (4, 10) on the display device (3) of the on-board computer (2) can be displayed and/or up-dated in real time on the display device (9) of the computer (6).

## Revendications

1. Système de liaison de données entre un ordinateur de bord à usage agricole pour régler et commander et/ou réguler des machines agricoles et/ou leurs éléments réglables ainsi que des dispositifs comportant un dispositif d'affichage de type écran tels que par exemple un écran d'affichage ainsi qu'un ordinateur de diagnostic et/ou de service,
l'ordinateur de bord est relié par une installation de transmission de données à un ordinateur de diagnostic et/ou de service,
l'ordinateur de diagnostic et/ou de service (6) comporte un dispositif de commande (8) ainsi qu'un dispositif d'affichage (9) de type écran, et
le dispositif d'affichage (9) de l'ordinateur de diagnostic (6) peut faire apparaître des images (10),
**caractérisé en ce que**
les images (10) représentent le dispositif d'affichage et le dispositif de service (4) de l'ordinateur de bord (2), et
entre l'ordinateur de bord (2) et l'ordinateur de diagnostic (6), on peut réaliser une telle transmission de données de façon à représenter une copie du contenu de l'écran image et/ou des éléments de service de l'ordinateur de bord de la machine sur l'écran d'affichage de l'ordinateur de diagnostic et/ou de service.

2. Système de liaison de données selon la revendication 1,
**caractérisé en ce que**
l'ordinateur de diagnostic et/ou de service (6) permet de transmettre des ordres d'entrée à l'ordinateur de bord (2) et de régler, de commander et/ ou de réguler la machine agricole.

3. Système de liaison de données selon la revendication 1,
**caractérisé en ce que**
la liaison de télétransmission de données (7) est utilisée pour la télécommande de l'ordinateur de bord (2) et/ou de la machine agricole.

4. Système de liaison de données selon la revendication 1,
**caractérisé en ce que**
la liaison de télétransmission de données (7) est utilisable pour la télécommande de l'ordinateur de bord (2) et/ou de la machine agricole.

5. Système de liaison de données selon la revendication 1,
**caractérisé en ce que**
la liaison de télétransmission de données (7) est utilisée pour la télécommande et/ou la télésurveillance de l'ordinateur de bord (2) et/ou de la machine agricole.

6. Système de liaison de données selon la revendication 1,
**caractérisé en ce que**
la liaison de télétransmission de données (7) est utilisée pour la télécommande et/ou la télésurveillance de la commande de l'ordinateur de bord (2) par l'utilisateur de cet ordinateur de bord (2).

7. Système de liaison de données selon les revendications précédentes,
**caractérisé en ce que**
l'image (4, 10) sur le dispositif d'affichage (3) de l'ordinateur de bord (2) est affichée et/ou actualisée en temps réel sur le dispositif d'affichage (9) de l'ordinateur de service (6).
